# FASCICULE DE BREVET EUROPEEN

(11) **EP 1 294 051 B1**
(45) Date de publication et mention de la délivrance du brevet: **07.06.2006**
(21) Numéro de dépôt: 02292232.2
(22) Date de dépôt: 12.09.2002
(51) Int. Cl.: H01Q 9/04, H01Q 1/24, H04M 1/02, H04B 1/38

(54) **Composant pour terminal de radiocommunication constituant antenne, haut-parleur et sonnerie**
Bauelement eines Funkkommunikationsendgerätes, das eine Antenne einen Lautsprecher und eine Klingelanläutevorrichtung bildet
Component for radio communication terminal constituting an antenna, a loudspeaker and a ringing device

(30) Priorité: 13.09.2001 FR 0111853
(43) Date de publication de la demande: 19.03.2003
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Dufosse, Stéphane, 95240 Cormeilles en Parisis (FR); Herve, Pascal, 81541 München (DE); Baro, José Marie, 95150 Taverny (FR); Cupif, Bertrand, 92160 Antony (FR)
(74) Mandataire: Feray, Valérie

(56) Documents cités:
- EP-A- 0 924 793
- WO-A-00/30268
- WO-A-00/74172
- US-B1- 6 201 501

## Description

La présente invention concerne un agencement structurel pour terminal de radiocommunication.

La tendance actuelle est de chercher à réaliser des terminaux de radiocommunication de petite dimension avec une ergonomie fonctionnelle et conviviale. Un terminal de radiocommunication comprend principalement un boîtier dans lequel sont logés des équipements, en particulier un équipement d'émetteur récepteur radio comprenant au moins une antenne, et un équipement d'interface homme machine incluant généralement un clavier, un écran et un transducteur sonore.

La recherche d'une ergonomie et d'une commodité accrue a poussé, par exemple, à loger l'antenne à l'intérieur du boîtier avec le développement d'antennes planaires dites « patch ». Cette même tendance incite en outre à réaliser des interfaces homme machine de plus en plus complètes et de dimension de plus en plus grande.

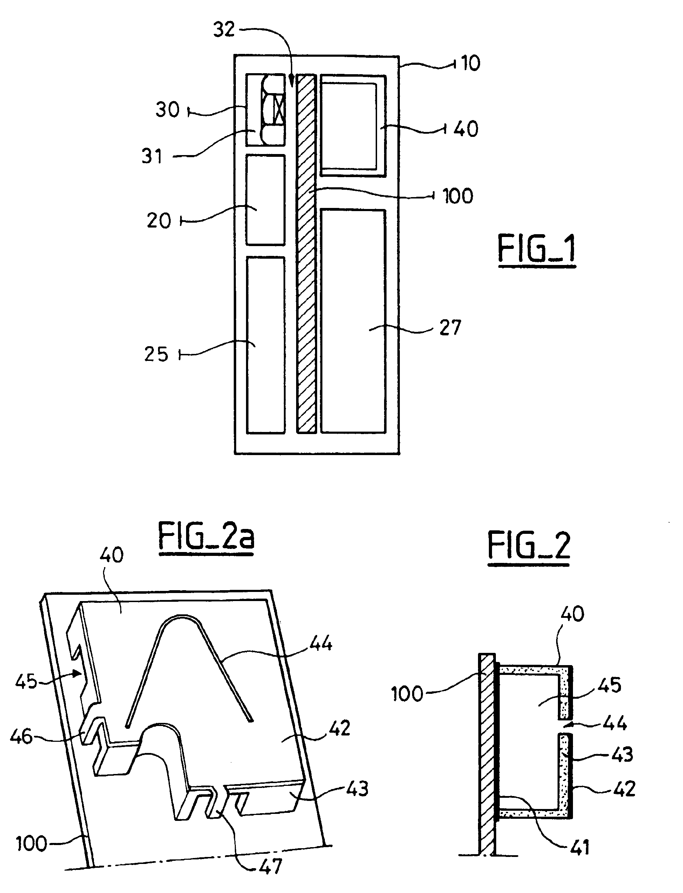

La figure 1 illustre schématiquement les différents composants compris dans un terminal de radiocommunication. Un tel terminal comprend généralement un boîtier 10 en matériau rigide isolant ou partiellement métallique dans lequel sont disposés différents composants connectés à un circuit imprimé 100. Le terminal comprend au moins un écran 20, un clavier 25, une batterie 27, ainsi qu'une antenne 40 permettant d'établir une radiocommunication et un transducteur de restitution de sons 30 apte à transformer en ondes acoustiques les signaux électriques qui lui sont fournis.

Le transducteur sonore 30 peut remplir plusieurs fonctions telles que celles d'écouteur, de haut-parleur et de sonnerie. L'écouteur est essentiellement destiné à être placé contre l'oreille d'un utilisateur lors de l'utilisation de l'appareil en communication, la sonnerie permet d 'alerter l'utilisateur d'un appel entrant ou d'une quelconque autre action et le haut-parleur permet une restitution sonore de fort volume pour des applications mains libres par exemple. Pour restituer les ondes acoustiques, le transducteur sonore 30 exploite deux volumes distincts définissant une cavité acoustique avant 31 et une cavité acoustique arrière 32 dont les formes et les dimensions sont choisies pour permettre une restitution sonore de qualité suffisante pour l'application à laquelle le transducteur est destiné.

Théoriquement, la fonction d'écouteur nécessite une taille de composant plus petite que celle requise pour une fonction de haut-parleur et de sonnerie qui doivent émettre un volume sonore plus important. Le volume occupé par le transducteur sonore 30 ne peut donc pas être réduit au-delà d'une certaine limite imposée par la fonction de haut-parleur.

Or, comme indiqué précédemment, la tendance actuelle est d'agrandir l'interface homme-machine et en particulier l'écran avec l'utilisation d'écran à cristaux liquides par exemple. La taille du clavier ne pouvant être réduite, toujours pour une question de commodité d'utilisation, la présente invention propose d'exploiter la place occupée par le transducteur sonore afin d'agrandir la place disponible pour recevoir un écran sans pour autant diminuer la taille du clavier ni augmenter la taille du terminal mobile.

A cet effet, l'invention propose de ne conserver qu'un simple écouteur sur la face avant du terminal et de transférer le haut-parleur et la fonction de sonnerie à l'arrière du terminal, en utilisant le volume de l'antenne comme cavité acoustique avant.

Les documents US 6,201,501 et WO 0074172 décrivent des terminaux de radiocommunication dans lesquels un trou pratiqué dans une antenne de type patch est utilisé comme canal acoustique pour un transducteur sonore.

L'invention concerne plus spécifiquement un agencement structurel pour terminal de radiocommunication tel que défini dans la revendication 1.

Selon un mode de réalisation, le transducteur sonore est disposé dans un évidement du circuit imprimé.

Selon une caractéristique, le plan de masse de l'antenne est ajouré.

Selon une caractéristique, des pattes d'élongation éloignent la membrane vibrante de la partie électriquement conductrice du transducteur.

Selon une caractéristique, des housses d'étanchéité sonore délimitent la cavité acoustique avant du transducteur à travers la cavité de l'antenne.

Selon une autre caractéristique, des joints d'ajustement de volume restreignent la cavité acoustique avant du transducteur à travers la cavité de l'antenne.

Selon une autre caractéristique, des joints d'étanchéité sonore délimitent la cavité acoustique avant entre l'antenne et le boîtier du terminal.

Selon une caractéristique, la pastille et le support diélectrique de l'antenne présentent au moins une fente en regard de la membrane vibrante du transducteur sonore.

Selon une autre caractéristique, le boîtier du terminal comporte au moins une ouverture en regard de la fente de l'antenne.

L'invention propose ainsi un nouveau composant qui pourrait être qualifié d'antenne_haut-parleur_sonnerie, ces trois éléments étant avantageusement combinés pour occuper une taille restreinte au sein du boîtier du terminal de radiocommunication. En outre, lors de la fabrication, ces éléments peuvent avantageusement être réalisés en un unique composant.

Les particularités et avantages de l'invention apparaîtront plus clairement à la lecture de la description qui suit, donnée à titre d'exemple illustratif et non limitatif et faite en référence aux figures annexées dans lesquelles :
- la figure 1, déjà décrite, illustre schématiquement les différents composants compris dans un terminal de radiocommunication ;
- les figures 2a et 2b illustrent schématiquement une antenne planaire de type « patch » ;
- la figure 3 illustre schématiquement un transducteur sonore ;
- la figure 4 illustre schématiquement un composant antenne_haut-parleur_sonnerie selon l'invention ;
- la figure 5 illustre schématiquement l'agencement structurel selon l'invention.

En référence aux figures 2a et 2b, une antenne planaire dite « patch » est illustrée. De telles antennes ont été dévéloppées en opposition aux antennes filaires classiquement utilisées et sont avantageusement intégrées dans le boîtier du terminal de radiocommunication. L'antenne patch 40 est disposée sur une face de la plaque de circuit imprimée 100 et présente une cavité 45 délimitée par deux structures conductrices, un plan de masse 41 et une pastille conductrice 42 disposée sur un support diélectrique 43. Le plan de masse 41 peut être constitué d'un unique élément plan, telle qu'une couche conductrice déposée sur la plaque 100, ou de plusieurs éléments conducteurs coplanaires éventuellement réalisés chacun sur des composants différents. La pastille conductrice 42 est généralement d'allure plane, mais peut être conformée selon les nécessités, et maintenue à une distance déterminée du plan de masse 41 par un support isolant rigide 43. Les formes et dimensions du support diélectrique 43 sont le résultat d'une adéquation dimensionnelle et structurelle à définir par l'homme du métier selon les applications recherchées.

Dans une forme préférée, illustrée sur la figure 2a, la pastille conductrice 42 se présente sous la forme d'un élément conducteur plan ou quasi-plan constitué par une couche conductrice gravée portée par un fin substrat 43, ou par une plaquette mince. Cette pastille 42 se prolonge par deux pattes conductrices 46, 47, repliées ou rapportées, qui sont positionnées à sa périphérie afin d'assurer l'une, une fonction de court-circuit du fait de sa liaison directe avec le plan de masse 41 et, l'autre, une fonction d'alimentation de l'antenne en liaison avec un organe de traitement de signal, non représenté, de l'équipement émetteur-récepteur radio.

L'antenne 40 est préférentiellement de type bi-bande. Pour permettre un tel fonctionnement la pastille 42 est constituée par un élément conducteur plan en partie centrale duquel est ménagée une fente 44, qui traverse la pastille sur son épaisseur et qui a une allure de U évasé. Cette fente 44 délimite deux zones planes à la surface de la pastille, une première de ces zones, dite zone intérieure, correspond majoritairement à la partie de la pastille qui est située à l'intérieur du U ; et la seconde de ces zones, dite extérieure, s'étend sur le reste de la pastille au-delà de la zone intérieure.

Une telle disposition permet, comme il est connu, d'obtenir deux résonances, l'une plutôt dans la zone intérieure et l'autre plutôt dans la zone extérieure, à partir de la patte de court-circuit, l'une étant sensiblement quart d'onde dans la bande supérieure et l'autre sensiblement quart d'onde dans la bande inférieure de manière à permettre l'exploitation de l'antenne dans les deux bandes demandées, les formes et dimensions de cette antenne étant calculées de manière connue de l'homme de métier à cette fin.

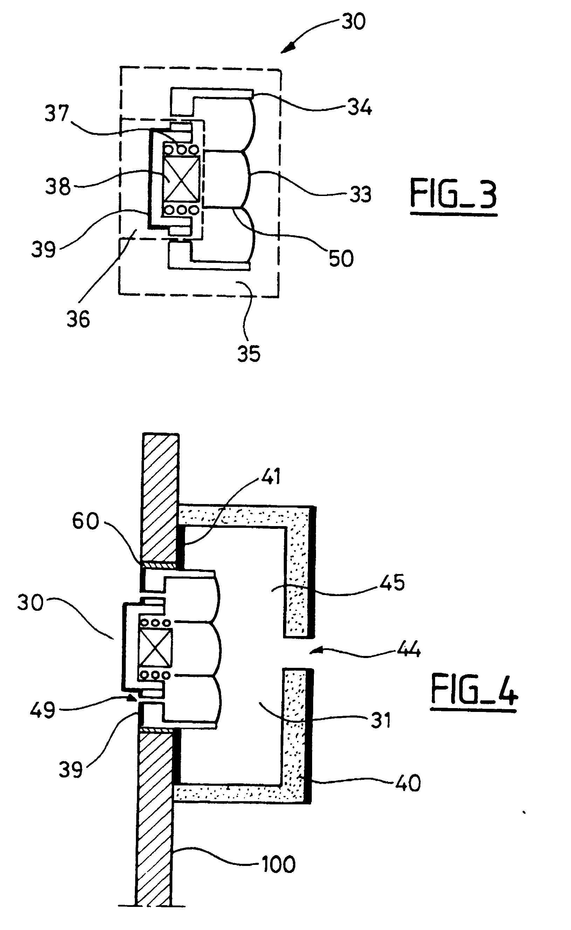

En référence à la figure 3, un transducteur sonore est illustré. De manière classique, un transducteur 30 comporte une membrane vibrante 33 disposée entre une cavité avant 31 et une cavité arrière 32 telles que précédemment définies. La membrane vibrante 33 est maintenue par des attaches sur les parois d'une coque 34 du transducteur de manière à pouvoir vibrer librement sous l'action d'une bobine 37, dont elle est solidaire, elle-même mise en vibration par un aimant 38 disposé sur un support métallique 39, telle qu'une culasse. Deux parties peuvent ainsi être définies dans le transducteur sonore 30, une première partie électriquement neutre 35 incluant la membrane 33 et la coque 34 constitués de matériaux diélectriques tels que des plastiques par exemple ; et une seconde partie électriquement conductrice 36 incluant la bobine 37, l'aimant 38, et la culasse 39 constitués de matériaux conducteurs.

Pour une meilleure application de l'invention, le transducteur 30 peut également comprendre des pattes d'élongation 50 qui éloignent la membrane vibrante 33 de la partie électriquement conductrice 36, par exemple sur une distance supérieure ou égale à 0.3 mm. Ces pattes d'élongation 50 étant incluses dans la partie électriquement neutre 35, elles sont constituées d'un matériau diélectrique. Les pattes d'élongation 50 peuvent être constituées de tiges, ou de tubes fermés ou semi-fermés disposés sur la bobine 37 du transducteur 30.

La figure 4 illustre schématiquement l'intégration du transducteur sonore 30 et de l'antenne 40 dans un même composant. L'invention propose en effet d'utiliser la cavité 45 de l'antenne dite « patch » 40 comme cavité acoustique avant 31, sans pour autant nuire au bon fonctionnement de ladite antenne. Pour se faire, la partie électriquement neutre 35 du transducteur sonore 30 est disposée dans la cavité 45 de l'antenne 40 et la partie électriquement conductrice 36 dudit transducteur 30 constitue au moins une partie du plan de masse 41 de l'antenne 40.

Selon un mode de réalisation, le transducteur 30 est disposé dans un évidement ménagé dans la plaque de circuit imprimé 100. Des joints 60, préférentiellement métalliques, peuvent être prévus. On constate que la partie électriquement conductrice 36 du transducteur 30 complète le trou réalisé dans le plan de masse 41 de l'antenne pour incorporer la cavité acoustique avant du transducteur dans la cavité de l'antenne. Avantageusement, la culasse 39 du transducteur peut être prolongée pour assurer une meilleure continuité électrique du plan de masse 41.

Afin de permettre le fonctionnement du transducteur sonore 30, la membrane 33 doit pouvoir vibrer dans un espace en contact avec la cavité acoustique arrière 32. A cet effet, le plan de masse 41 de l'antenne doit être ajouré, c'est à dire présenter au moins une perforation 49 afin de permettre une circulation d'air et des ondes acoustiques entre la membrane 33 la cavité arrière 32 située dans le boîtier 10 du terminal de radiocommunication. Par exemple, une telle perforation 49 peut être située dans la culasse 39 du transducteur 30 si ce dernier est disposé dans un évidemment du circuit imprimé 100, ou directement dans la couche conductrice 41 du plan de masse. La rupture locale du plan de masse 41 est déjà connue pour certaines applications et ne nuit pas au bon fonctionnement de l'antenne 40 lorsque la continuité électrique du plan de masse 41 est globalement maintenue.

Une fente 44 est ménagée dans l'antenne 40 en regard de la membrane vibrante 33 afin de permettre une propagation des ondes acoustiques vers l'extérieur. Cette fente 44 peut avantageusement correspondre à la fente ménagée dans la pastille 42 d'une l'antenne bi-bande, telle que précédemment décrit. Dans le cadre de la présente invention, cette fente 44 doit également transpercer le support diélectrique 43 de l'antenne 40.

Selon un autre mode de réalisation, non illustré, le transducteur peut être disposé sur une face de la plaque de circuit imprimé et être donc entièrement inclus dans la cavité de l'antenne. Le bon fonctionnement de l'antenne peut quand même être garanti si la continuité du plan de masse reste assurée électriquement malgré les plans non coplanaires qui le constituent.

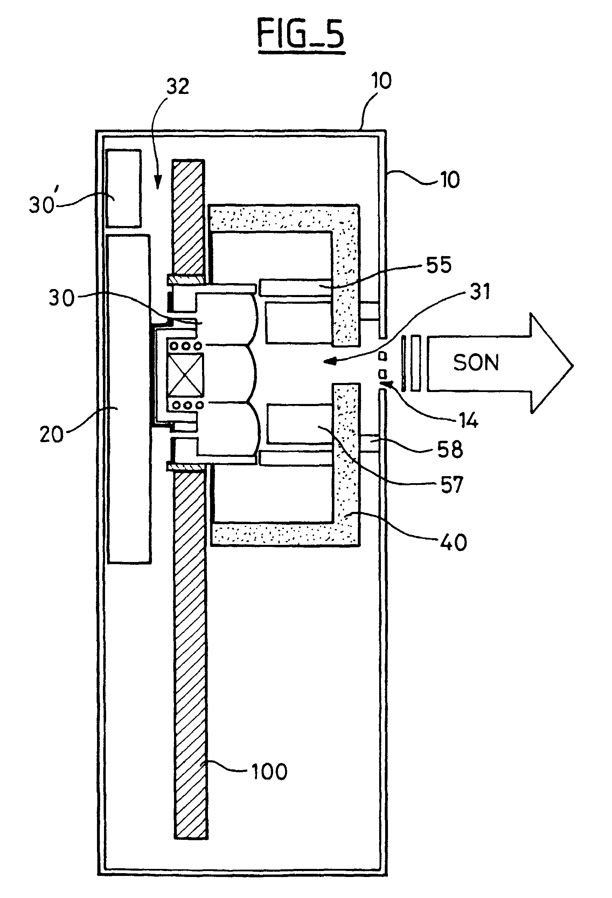

La figure 5 illustre l'agencement structurel obtenu selon la présente invention. Un écran 20 de grande taille peut être utilisé car la face avant du boîtier 10 du terminal de radiocommunication ne comporte qu'un transducteur sonore 30' de petite dimension pour une simple fonction d'écouteur. Les fonctions de haut-parleur et de sonnerie sont assurées par le transducteur sonore 30 intégré à l'antenne 40 selon l'agencement proposé par la présente invention.

La cavité acoustique avant 31 du transducteur sonore 30 est incorporée dans la cavité 45 définie par les éléments conducteurs 41, 42 de l'antenne patch 40. Pour un fonctionnement optimal, il est avantageux de bien délimiter cette cavité acoustique avant 31 et même de la restreindre pour obtenir un spectre sonore élargi. Ainsi, il est proposé de placer des housses d'étanchéité sonore 55 pour délimiter la cavité acoustique avant 31 du transducteur 30 à travers la cavité 45 de l'antenne, ainsi que des joints d'étanchéité sonore 58 pour délimiter la cavité acoustique avant 31 entre l'antenne 40 et le boîtier 10 du terminal.

Avantageusement, des joints d'ajustement de volume 57 peuvent également être disposés dans la cavité 45 de l'antenne pour réduire la cavité acoustique avant 31 du transducteur 30 et élargir ainsi le spectre sonore.

Les éléments de housses et joints d'étanchéité 55 et 58 et de joints d'ajustement de volume 57 étant disposés dans la cavité 45 de l'antenne 40, ils sont constitués de matériaux diélectriques, tels que du plastique ou des mousses.

En outre, il est préférable que le boîtier 10 du terminal comporte au moins une ouverture 14 en regard de la fente 44 ménagée dans l'antenne 40 pour permettre une propagation des ondes acoustiques vers l'extérieur.

## Revendications

1. Agencement structurel pour terminal de radiocommunication comprenant un boîtier (10) dans lequel sont disposés au moins un transducteur sonore (30) et une antenne planaire dite « patch » (40) connectés à un circuit imprimé (100), ledit transducteur (30) étant constitué d'une partie électriquement neutre (35) comprenant au moins une membrane vibrante (33) et d'une partie électriquement conductrice (36), ladite antenne (40) présentant une cavité (45) délimitée par un plan de masse (41) et une pastille conductrice (42) disposée sur un support diélectrique (43) parallélement au plan de masse, **caractérisé en ce que** la partie électriquement neutre (35) du transducteur sonore (30) est située dans ladite cavité (45) et la partie électriquement conductrice (36) du transducteur sonore (30) constitue une partie du plan de masse (41) de l'antenne (40), et **en ce que** la pastille (42) et le support diélectrique (43) de l'antenne (40) présentent au moins une fente (44) en regard de la membrane vibrante (33) du transducteur sonore (30), ladite cavité (45) constituant une cavité acoustique avant pour le transducteur.

2. Agencement structurel selon la revendication 1, **caractérisé en ce que** le transducteur sonore (30) est disposé dans un évidement du circuit imprimé (100).

3. Agencement structurel selon l'une des revendications précédentes, **caractérisé en ce que** le plan de masse (41) de l'antenne (40) est ajouré (49).

4. Agencement structurel selon l'une des revendications précédentes, **caractérisé en ce que** des pattes d'élongation (50) éloignent la membrane vibrante (33) de la partie électriquement conductrice (36) du transducteur (30).

5. Agencement structurel selon l'une des revendications précédentes, la membrane vibrante (33) du transducteur sonore (30) étant disposée entre une cavité acoustique avant (31) et une cavité acoustique arrière (32), **caractérisé en ce que** des housses d'étanchéité sonore (55) délimitent la cavité acoustique avant (31) du transducteur (30) à travers la cavité (45) de l'antenne.

6. Agencement structurel la revendication 5, **caractérisé en ce que** des joints d'ajustement de volume (57) restreignent la cavité acoustique avant (31) du transducteur (30) à travers la cavité (45) de l'antenne.

7. Agencement structurel selon l'une des revendications précédentes, la membrane vibrante (33) du transducteur sonore (30) étant disposée entre une cavité acoustique avant (31) et une cavité acoustique arrière (32), **caractérisé en ce que** des joints d'étanchéité sonore (58) délimitent la cavité acoustique avant (31) entre l'antenne (40) et le boîtier (10) du terminal.

8. Agencement structurel selon l'une des revendications précédentes, **caractérisé en ce que** le boîtier (10) du terminal comporte au moins une ouverture (14) en regard de la fente (44) de l'antenne (40).

## Claims

1. A structural layout for a radio communications terminal comprising a casing (10) in which at least one sound transducer (30) and a so-called patch planar antenna (40) connected to a printed circuit (100) are positioned, said transducer (30) consisting of an electrically neutral portion (35) comprising at least one vibrating membrane (33) and an electrically conducting portion (36), said antenna (40) having a cavity (45) delimited by a ground plane (41) and a conducting pad (42) positioned on a dielectric support (43) parallel to the ground plane, **characterized in that** the electrically neutral portion (35) of the sound transducer (30) is located in said cavity (45) and the electrically conducting portion (36) of the sound transducer (30) forms a portion of the ground plane (41) of the antenna (40), and **in that** the pad (42) and the dielectric support (43) of the antenna (40) have at least one slit (44) facing the vibrating membrane (33) of the sound transducer (30), said cavity (45) forming a front acoustic cavity for the transducer.

2. The structural layout according to claim 1, **characterized in that** the sound transducer (30) is positioned in a recess of the printed circuit (100).

3. The structural layout according to any of the preceding claims, **characterized in that** the ground plane (41) of the antenna (40) is apertured (49).

4. The structural layout according to any of the preceding claims, **characterized in that** extension tabs (50) move the vibrating membrane (33) away from the electrically conducting portion (36) of the transducer (30).

5. The structural layout according to any of the preceding claims, the vibrating membrane (33) of the sound transducer (30) being positioned between a front acoustic cavity (30) and a rear acoustic cavity (32), **characterized in that** soundproof covers (55) delimit the front acoustic cavity (31) of the transducer (30) through the cavity (45) of antenna.

6. The structural layout according to claim 5, **characterized in that** volume adjustment gaskets (57) restrict the front acoustic cavity (31) of the transducer (30) through the cavity (45) of the antenna.

7. The structural layout according to any of the preceding claims, the vibrating membrane (33) of the sound transducer (30) being positioned between a front acoustic cavity (31) and a rear acoustic cavity (32), **characterized in that** soundproof gaskets (58) delimit the front acoustic cavity (31) between the antenna (40) and the casing (10) of the terminal.

8. The structural layout according to any of the preceding claims, **characterized in that** the casing (10) of the terminal includes at least one aperture (14) facing the slit (44) of the antenna (40).

## Patentansprüche

1. Strukturanordnung für Funkkommunikationsendgerät, die ein Gehäuse (10) umfasst, in dem wenigstens ein Schallwandler (30) und eine ebene sogenannte "Patch"-Antenne (40), die an eine gedruckte Schaltung (100) angeschlossen sind, angeordnet sind, wobei der Wandler (30) aus einem elektrisch neutralen Teil (35), der wenigstens eine schwingende Membran (33) aufweist, und aus einem elektrisch leitenden Teil (36) gebildet ist, wobei die Antenne (40) einen Hohlraum (45) aufweist, der durch eine Masseebene (41) und durch eine Anschlussfläche (42), die auf einem dielektrischen Träger (43) parallel zur Masseebene angeordnet ist, begrenzt ist, **dadurch gekennzeichnet, dass** sich der elektrisch neutrale Teil (35) des Schallwandlers (30) in dem Hohlraum (45) befindet und der elektrisch leitende Teil (36) des Schallwandlers (30) einen Teil der Masseebene (41) der Antenne (40) bildet und dass die Anschlussfläche (42) und der dielektrische Träger (43) der Antenne (40) gegenüber der schwingenden Membran (33) des Schallwandlers (30) wenigstens einen Schlitz (44) aufweisen, wobei der Hohlraum (45) einen vorderen akustischen Hohlraum für den Wandler bildet.

2. Strukturanordnung nach Anspruch 1, **dadurch gekennzeichnet, dass** der Schallwandler (30) in einer Aussparung der gedruckten Schaltung (100) angeordnet ist.

3. Strukturanordnung nach einem der vorhergehenden Ansprüche, **dadurch gekennzeichnet, dass** die Masseebene (41) der Antenne (40) durchbrochen (49) ist.

4. Strukturanordnung nach einem der vorhergehenden Ansprüche, **dadurch gekennzeichnet, dass** Verlängerungsansätze (50) die schwingende Membran (33) von dem elektrisch leitenden Teil (36) des Wandlers (30) in einem Abstand halten.

5. Strukturanordnung nach einem der vorhergehenden Ansprüche, bei der die schwingende Membran (33) des Schallwandlers (30) zwischen einem vorderen akustischen Hohlraum (31) und einem hinteren akustischen Hohlraum (32) angeordnet ist, **dadurch gekennzeichnet, dass** schalldichte Hüllen (55) den vorderen akustischen Hohlraum (31) des Wandlers durch den Hohlraum (45) der Antenne hindurch begrenzen.

6. Strukturanordnung nach Anspruch 5, **dadurch gekennzeichnet, dass** Volumeneinstellverbindungen (57) den vorderen akustischen Hohlraum (31) des Wandlers (30) durch den Hohlraum (45) der Antenne hindurch begrenzen.

7. Strukturanordnung nach einem der vorhergehenden Ansprüche, bei der die schwingende Membran (30) des Schallwandlers (30) zwischen einem vorderen akustischen Hohlraum (31) und einem hinteren akustischen Hohlraum (32) angeordnet ist, **dadurch gekennzeichnet, dass** schalldichte Verbindungen den vorderen akustischen Hohlraum (31) zwischen der Antenne (40) und dem Gehäuse (10) des Endgeräts begrenzen.

8. Strukturanordnung nach einem der vorhergehenden Ansprüche, **dadurch gekennzeichnet, dass** das Gehäuse (10) des Endgeräts gegenüber dem Schlitz (44) der Antenne (40) wenigstens eine Öffnung (14) aufweist.
